# EUROPEAN PATENT APPLICATION

(11) **EP 1 874 017 A1**
(43) Date of publication of application: **02.01.2008**
(21) Application number: 07012038.1
(22) Date of filing: 20.06.2007
(51) Int. Cl.: H04M 3/42

(54) **Caller-controlled alerting signals**

(30) Priority: 27.06.2006 US 475524
(71) Applicant: Nortel Networks Limited, St Laurent, Québec H4S 2A9 (CA)
(72) Inventor: Sylvain, Dany, Gatineau Quebec J8T 6A6 (CA)
(74) Representative: Boyce, Conor

(57) **Abstract**

The present invention allows a caller to control how a called party is alerted when a call is presented to the called party. When initiating the call, the caller may select the desired alerting signal to be provided to the called party for the call. The call is routed toward the called party with a specific alerting request identifying the desired alerting signal. When the call is presented to the called party, the alerting signal provided to the called party is based on the specific alerting request. If the caller does not select a specific alerting signal, the call is presented in traditional fashion. The caller may select a desired alerting signal on a call-by-call basis.

## Description

### Field of the Invention

The present invention relates to communications, and in particular to allowing a caller to control the alerting signal provided to the called party when the call is presented.

### Back-ground of the Invention

In modern society, the pervasive use of mobile telephones combined with the availability of work and home telephones has led to a state where many people are never out of communication range. These people can receive calls throughout the day and night whether they are at home, at work, or traveling. Always being available for communications has its obvious advantages, but there are also numerous disadvantages. One key disadvantage is that a called party can never know the relative urgency associated with an incoming call, unless the call is answered or a resulting voicemail is checked after the call goes unanswered. Similarly, the caller is often unaware of the called party's relative availability to take the call, but has no effective way to determine whether the called party is available for the call. Callers are often considerate of the called party's desire or availability to receive and take a call. As such, many callers will send an email or instant messaging message to the called party before initiating the call to determine if the called party is available to take the call. This preliminary message exchange is often burdensome or ineffective, especially when the called party has access to a telephone, but not to a messaging service. In many instances, the caller will not be aware the relative availability of the party to be called and must simply take their chances on the party to be called being available. Even if the called party can receive the call, the called party will have no indication of the relative importance of the call, and as such, may be unnecessarily interrupted for a call that would be more appropriate at a later time, or may ignore a call that is urgent.

Accordingly, there is a need for a technique to allow callers to indicate the relative urgency or importance of a call to a called party without requiring the called party to answer the call, check a subsequent voicemail message left for the called party if the call goes unanswered, or exchange messages to determine the called party's availability.

### Summary of the Invention

The present invention allows a caller to control how a called party is alerted when a call is presented to the called party. When initiating the call, the caller may select the desired alerting signal to be provided to the called party for the call. The call is routed toward the called party with an alerting request identifying the desired alerting signal. When the call is presented to the called party, the alerting signal provided to the called party is based on the alerting request. If the caller does not select an alerting signal, the call is presented in traditional fashion. The caller may select a desired alerting signal on a call-by-call basis.

### Brief Description of the Drawing Figures

The accompanying drawing figures incorporated in and forming a part of this specification illustrate several aspects of the invention, and together with the description serve to explain the principles of the invention.

FIGURE 1 is a communication environment according to one embodiment of the present invention.

FIGURE 2 illustrates call initiation according to a first embodiment of the present invention.

FIGURE 3 is a communication flow illustrating call initiation when a caller requests a special alerting signal according to the embodiment of Figure 2.

FIGURE 4 is a communication flow illustrating call initiation when a caller does not request a special alerting signal according to the embodiment of Figure 2.

FIGURE 5 illustrates call initiation according to a second embodiment of the present invention.

FIGURE 6 illustrates call initiation according to a third embodiment of the present invention.

FIGURE 7 is a block representation of a switch according to one embodiment of the present invention.

FIGURE 8 is a block representation of a user element according to one embodiment of the present invention.

### Detailed Description of the Preferred Embodiments

The present invention allows a caller to control how a called party is alerted when a call is presented to the called party. When initiating the call, the caller may select the desired alerting signal to be provided to the called party for the call. The call is routed toward the called party with an alerting request identifying the desired alerting signal. When the call is presented to the called party, the alerting signal provided to the called party is based on the alerting request. If the caller does not select an alerting signal, the call is presented in traditional fashion. For less urgent calls, the caller-selected alerting signal may result in a soft ringing signal being provided to the called party. For more urgent calls, the caller-selected alerting signal may result in a loud ringing signal being provided to the called party. For normal calls where the caller does not select an alerting signal, a normal ringing signal is provided to the called party. The caller may select a desired alerting signal on a call-by-call basis. Depending on the type of caller and called party terminals and the supporting network, the present invention may be implemented in the terminals, the supporting networks, or a combination thereof. Regardless of implementation, the present invention allows the caller to dynamically control the alerting signal presented to a called party for a call on a call-by-call basis. The present invention shows how alerting can be controlled by the caller with a variety of calling and called endpoints, including IP telephones, mobile handsets, and PSTN telephones, whether the call is made via the PSTN or newer packet networks. Prior to delving into the details of the present invention, an overview of a communication environment in which the present invention may be implemented is provided.

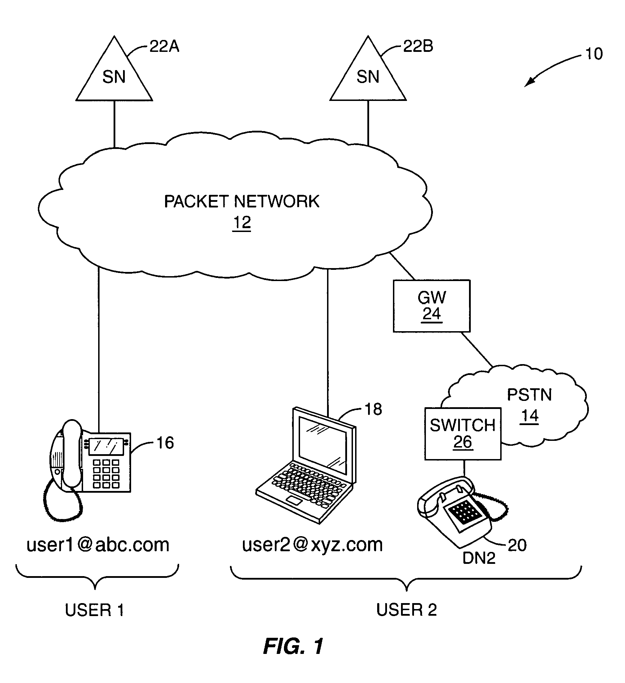

With reference to Figure 1, a communication environment 10 is illustrated where a packet network 12 and the public switched telephone network (PSTN) 14 cooperate to support communications between an Internet Protocol (IP) telephone terminal 16 of User 1 and either a personal computer (PC) 18 or telephone terminal 20 of User 2. The ir telephone iei-niinal 16 and the PC 18 are configured to facilitate voice-over-packet (VoP) sessions over the packet network 12 under the control of service nodes 22A and 22B, respectively. The service nodes 22A and 22B provide the requisite call signaling to allow a direct packet session between the IP telephone terminal 16 and the PC 18. The PC 18 is assumed to include a microphone and speaker along with the requisite processing and control circuitry to facilitate a telephony interface for User 2. The telephone terminal 20 may be an analog or time-division multiplex (TDM) based terminal.

Interworking between the packet network 12 and the PSTN 14 is provided by a gateway (GW) 24 in traditional fashion. A telephony switch 26, such as a class 5 telephony switch or a public branch exchange (PBX), will provide a substantially direct interface for the telephone terminal 20 of User 2. Assume that the IP telephone terminal 16 is associated with an address of user1@abc.com, PC 18 is associated with an address of user2@xyz.com, and telephone terminal 20 is associated with a directory number of DN2.

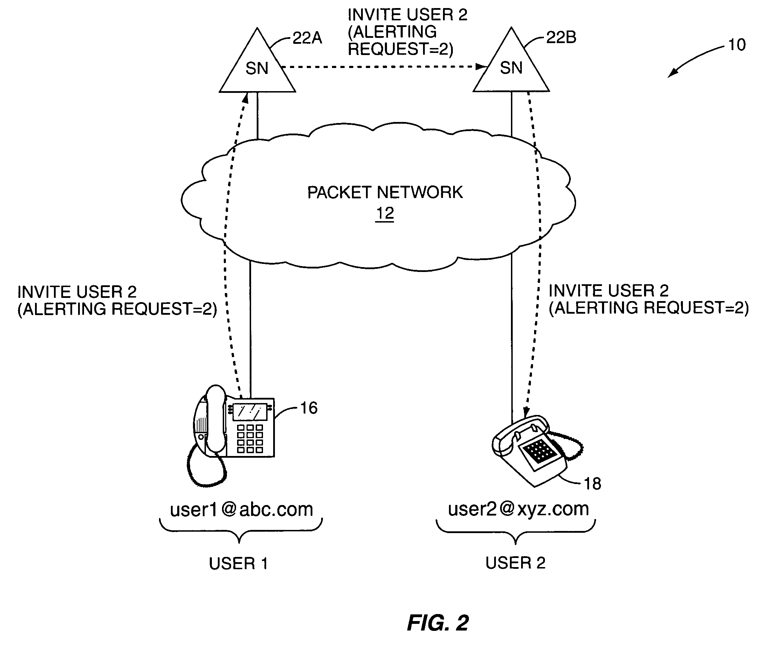

With reference to Figure 2, one embodiment of the present invention is illustrated with respect to the communication environment of Figure 1. In particular, assume that User 1 initiates a call to User 2, and elects to provide an alerting request, which will dictate an altering signal be provided to User 2 when the call is presented to the PC 18. If User 1 desires to control the alerting signal to be provided to User 2, User 1 will provide an input to the IP telephone terminal 16 indicating that User 1 desires to control the alerting signal for a call being initiated, and will input the destination address for the call. The IP telephone terminal 16 will recognize that User 1 desires to control the alerting signal to be provided to User 2, and will create a session initiation message to initiate a call to the PC 18. The session initiation message includes additional information identifying the specific type of alerting request made by User 1.

In this example, the Session Initiation Protocol (SIP) is used, and the session initiation message is a SIP Invite message directed to User 2's PC 18 using the address user2@xyz.com and including the alerting request. Service node 22A may act as a SIP proxy or other call control node in the packet network 12 for the IP telephone terminal 16, and as such, the SIP Invite is sent from the IP telephone terminal 16 to the service node 22A, which will forward the invite to service node 22B, which serves the PC 18. The service node 22B will send the Invite to the PC 18. Upon receiving the Invite from service node 22B, the PC 18 will recognize that the Invite includes an alerting request, and if possible, will provide an alerting signal to User 2 based on the specific alerting request and proceed with the traditional SIP messaging exchange necessary to establish a session over the packet network 12 and between the IP telephone terminal 16 of User 1 and the PC 18 of User 2, if User 2 decides to answer the call.

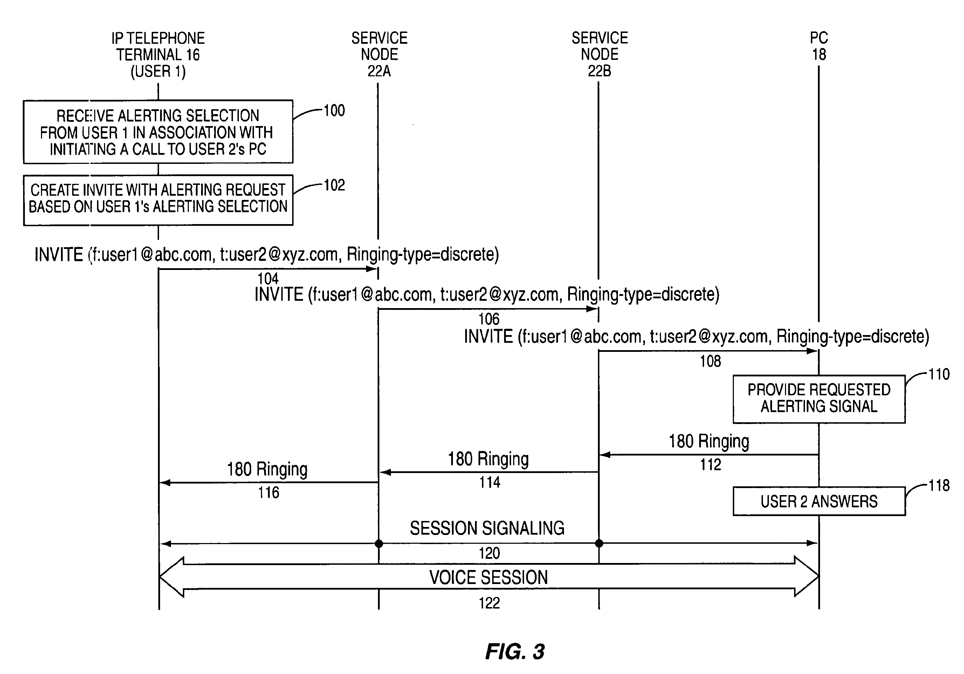

In the embodiment illustrated in Figure 2, the IP telephone terminal 16 is capable of recognizing user input corresponding to a desire to control alerting at the called party's terminal when the caller is initiating a call, and will configure session initiation messages to include an appropriate alerting request. In this example, a type 2 alerting request represents a request for discrete ringing. The PC 18 is capable of processing these session initiation messages having the specific alerting request, and providing differentiated alerting signals to the called party based on the alerting request. The call signaling entities, such as the service nodes 22A and 22B, need not be aware of the type of alerting request or the fact that different alerting signals may be provided to the called party based on the specific alerting request made by the caller. The input provided to the IP telephone terminal 16 may take any form ranging from entering a special code to controlling the amount of time certain buttons are pressed or using dedicated keys to trigger a specific type of alerting request. With reference to Figure 3, a communication flow is provided to illustrate the example provided in Figure 2. Initially, the IP telephone terminal 16 of User 1 will receive an alerting selection from User 1 (step 100). In response, the IP telephone terminal 16 will create an Invite with the specific alerting request based on User 1's alerting selection (step 102). In this instance, assume the alerting signal corresponds to a discrete ringing signal, which corresponds to a low-volume ring signal that alternates between ringing for one half second and being silent for two seconds, instead of the traditional ring signal, which rings for two seconds and is silent for four seconds at a normalized (louder) volume. As such, the Invite will be from user1 @abc.com, to user2@xyz.com, and include a ringing-type field set to discrete ringing.

The invite is sent to service node 22A (step 104), which will forward the Invite to service node 22B (step 106). Service node 22B will forward the Invite to the PC 18 (step 108), which will process the Invite and provide the requested alerting signal to User 2 (step 110). While the alerting signal is being provided to User 2, the PC 18 will respond with a 180 Ringing signal in traditional SIP fashion (step 112). Service node 22B will receive the 180 Ringing signal and forward it to service node 22A (step 114), which will forward the ringing signal to the IP telephone terminal 16 (step 116). Assuming User 2 answers (step 118), the PC 18 and the IP telephone terminal 16 will exchange the requisite session signaling via the service nodes 22A and 22B (step 120), wherein a voice session for the call is established between the IP telephone terminal 16 and the PC 18 (step 122).

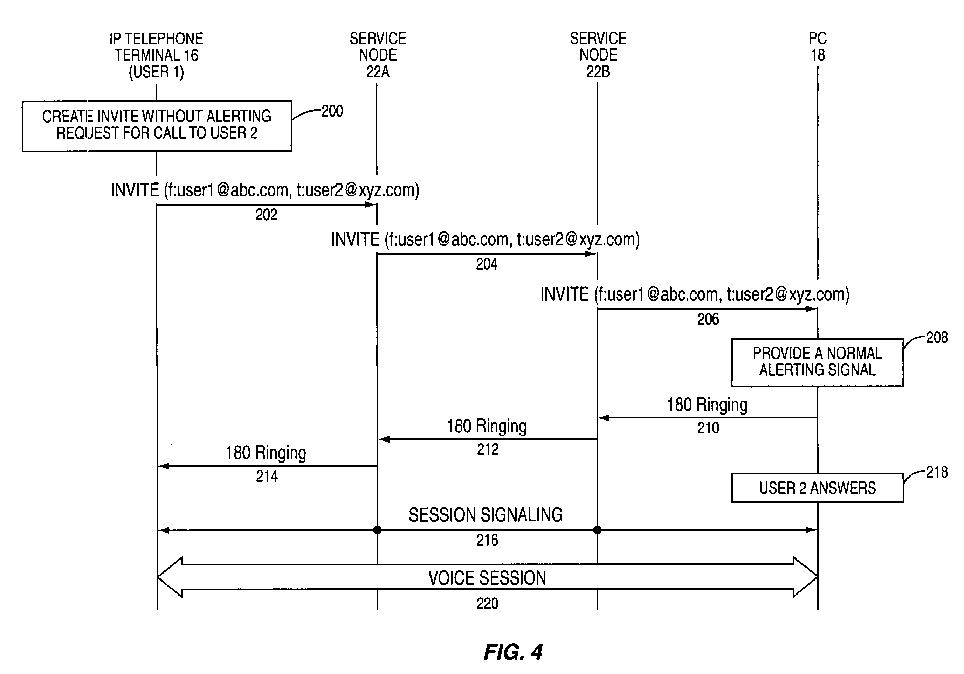

With reference to Figure 4, a traditional communication flow is provided where the user does not provide input indicating that a specific alerting request is being made. When initiating a call to User 2 via the PC 18, the IP telephone terminal 16 will create an Invite either without a specific alerting request, or an indication in the alerting request field that no specific alerting request was made for the call to User 2 (step 200). The IP telephone terminal 16 will send the Invite to service node 22A (step 202), which will send the Invite to service node 22B (step 204). Service node 22B will send the Invite to the PC 18 (step 206), which will process the Invite and recognize that there is no special alerting request. As such, the PC 18 will provide a normal alerting signal to User 2 (step 208). In response to receiving the Invite, the PC 18 will respond with a 180 Ringing signal indicating that the call is being presented to User 2. Service node 22B will receive the 180 Ringing signal (step 210) and forward it to service node 22A (step 212), which will forward the ringing signal to the IP telephone terminal 16 (step 214). Assuming User 2 answers the call (step 216), the requisite session signaling will take place between the IP telephone terminal 16 and the PC 18 via the service nodes 22A and 22B (step 218), wherein a voice session is established between the IP telephone terminal 16 and the PC 18 (step 220).

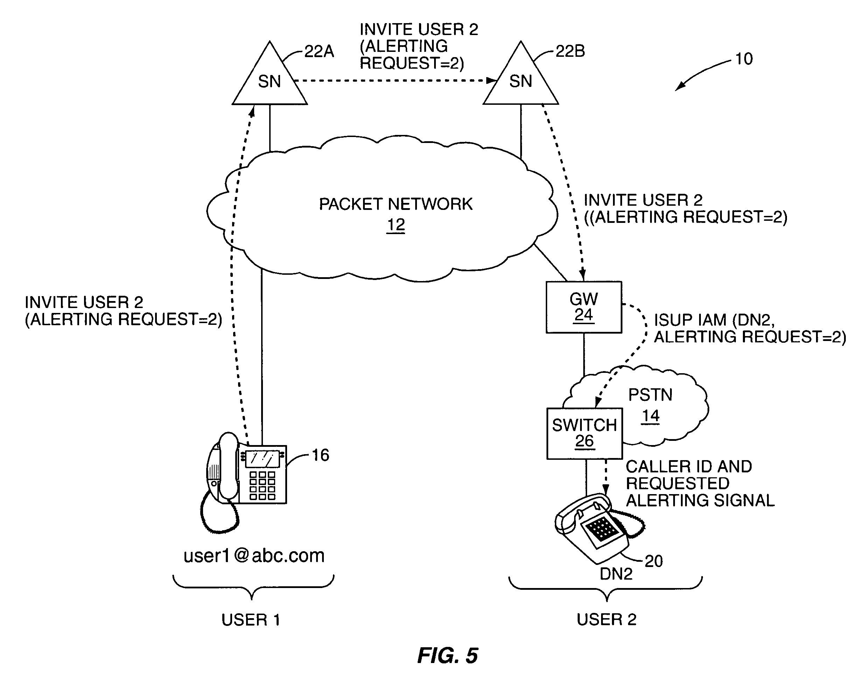

With reference to Figure 5, another embodiment of the present invention is illustrated, wherein the requested alerting signal is provided to the telephone terminal 20 of User 2. In this instance, the call is initially presented to the switch 26, which will recognize the type of alerting request and operate to control the telephone terminal 20 to provide the requested alerting signal. When User 1 desires to call User 2 at telephone terminal 20 using the directory number DN2, User 1 has the option of having the call presented to User 2 with a special alerting signal. When entering the directory number DN2 or corresponding address, User 1 may also provide an input requesting that a special alerting signal be provided to User 2 when the call is presented at the telephone terminal 20. If a specific alerting request is made, the IP telephone terminal 16 will generate an Invite including the alerting request, and will send the Invite to service node 22A, which will forward the Invite to service node 22B, which serves User 2. Since the telephone terminal 20 is supported by the switch 26 of the PSTN 14, service node 22B will forward the Invite to the gateway 24, which provides the interworking between the packet network 12 and the PSTN 14. The gateway 24 will be able to convert the Invite to the appropriate PSTN signaling.

In this case, assume the PSTN 14 uses the Integrated Services User Part (ISUP) protocol and that the session initiation message in ISUP is an Initial Address Message (IAM). The IAM is generated to identify the directory number DN2 for the telephone terminal 20, and is modified to include indicia corresponding to the type of alerting request made by User 1 and provided in the Invite. The ISUP IAM is presented to the switch 26, which will recognize that a call should be presented to the telephone terminal 20, and that it should be presented using a requested alerting signal. The ISUP IAM will also include the caller identification information associated with User 1. As such, the switch 26 may present the call to the telephone terminal 20 using the requested alerting signal, and may also provide the caller identification information identifying User 1 or information associated with the IP telephone terminal 16. The alerting signal may be configured in virtually any way. In this instance, the call processing on the called party's end is moved from the telephone terminal 20 to the switch 26, which will recognize that a specific alerting request is needed for an incoming call, and will take the necessary actions to provide the requested alerting signal to the telephone terminal 20.

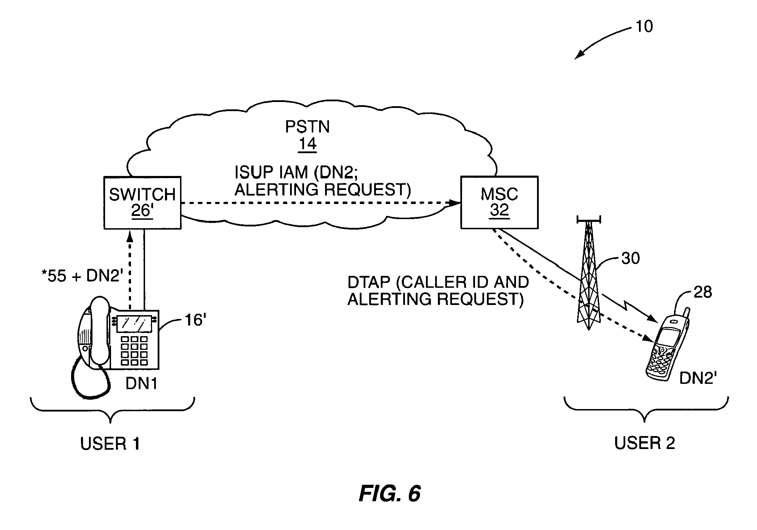

With reference to Figure 6, assume that User 1 also has a wireline telephone terminal 16', which is supported by a switch 26' in the PSTN 14. Also assume that User 2 has a mobile terminal 28, which is supported by a base station 30 and an associated mobile switching center (MSC) 32, which is also associated with the PSTN 14. In this instance, the wireline telephone terminal 16' is substantially controlled by the switch 26' and cannot process specific alerting request input from User 1. In this embodiment, the switch 26' is configured to recognize codes dialed in association with initiating a call as special alerting requests. These codes may take any form, and may effectively represent standalone special feature codes, prefixes, or suffixes associated with dialing a number to initiate a call to a called party. As illustrated, the mobile terminal 28 is associated with a directory number DN2'. Further, a special code *55 preceding a directory number for an outgoing call is indicative of a special alerting request.

As such, when User 1 takes the wireline telephone terminal 16' offhook and dials *55 followed by the directory number DN2' of the mobile terminal 28, the switch 26' will receive each of these dialed digits. The switch 26' will recognize the *55 code, and will create an ISUP IAM to initiate a call toward the mobile terminal 28 having the alerting request. As such, the ISUP IAM will include the directory number DN2' and the alerting request. The switch 26' will send the IAM toward the MSC 32 currently supporting the mobile terminal 28. The MSC 32 will recognize that a specific alerting request has been provided in association with the call. The MSC 32 will present the call to the mobile terminal 28 in a manner identifying the alerting request, and perhaps the caller identification for User 1 or associated with the wireline terminal 16'. The mobile terminal 28 will process the specific alerting request and provide a corresponding alerting signal based on the specific alerting request to User 2. For example, if the alerting request is for a discrete ringing, the mobile terminal 28 may only vibrate once or twice to indicate the incoming call. If User 2 decides to answer the call, the call is established in traditional fashion.

From the above, the functionality of the present invention may be implemented in user elements, as well as in network nodes, alone or in combination. Depending on the configuration, a caller may only have one special alerting request available. As such, the caller may initiate the call without making the special request, wherein the call is presented to the called party with a standard alerting signal. If the caller elects to invoke a special alerting signal, the call will be presented with an alerting signal that is different than the normal alerting signal. In contrast, the caller may have numerous alerting signals at her disposal, wherein different alerting signals may be selected based on relative urgency. Less important calls may be presented with more subtle alerting signals, whereas more urgent call may be presented with more aggressive alerting signals.

Further, the alerting request may simply be an indication that a different alerting signal should be presented, where the caller does not choose which alerting signal is being presented, but is aware that a different alerting signal is being presented. Similarly, the various levels of urgency may be provided in the alerting request, wherein the corresponding alerting signals provided to different called parties may vary, yet the relative urgency of the call is associated with the different alerting signals. In other embodiments, the actual alerting signal to be provided is selected by the caller, wherein the alerting signal is actually a ringtone or message provided by the caller. Those skilled in the art will recognize various ways of implementing the present invention.

With the present invention, the alerting signal provided to the called party for a call is under the control of the caller. As such, depending on the caller's actions, the called party's terminal may alert the called party in different ways for different calls from the same caller. Based on the different alerting signals selected by the caller, the called party can more readily determine whether to answer the call. In environments where the called party's terminal or network does not support the present invention, calls to the called party are presented in normal fashion.

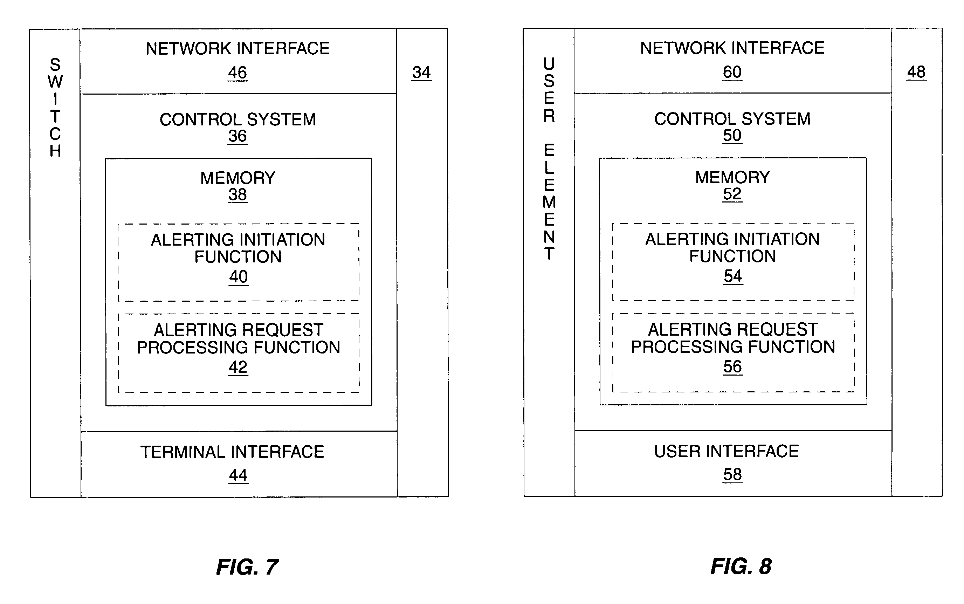

With reference to Figure 7, a telephony switch 34, such as the switch 26, switch 26', or MSC 32, is provided. The switch 34 will have a control system 36 associated with memory 38 for storing the software required to operate as described above. Depending on the configuration of the switch 34, the memory 38 may include an alerting initiation function 40 to facilitate recognition of specific alerting requests made by callers in association with initiating a call and originating calls with specific alerting requests. The memory 38 may also include an alerting request processing function 42, which is configured to receive call signaling messages including alerting requests and presenting these calls to user elements in a manner where the alerting signal provided to the called party from the called party's terminal corresponds to the specific alerting request. The control system 36 is also associated with a terminal interface 44 and a network interface 46. The terminal interface 44 may facilitate communications with the called party's user element directly or via a cellular network. The network interface 46 facilitates communications over the PSTN 14 with other switches as well as gateways 24 to the packet network 12.

With reference to Figure 8, a user element 48, such as the IP telephone terminal 16, PC 18, wireline telephone terminal 16', and mobile terminal 28 is illustrated. The user element 48 will include a control system 50 having memory 52 with the requisite software to operate as described above. The memory 52 may also include an alerting initiation function 54 as well as an alerting request processing function 56. The alerting initiation function 54 will allow the user element 48 to recognize user input indicating that a specific alerting request is being made in association with a call, and create a session initiation message with the specific alerting request. The alerting request processing function 56 allows the user element 48 to receive call signaling messages, which indicate that special alerting is requested for an incoming call, as well as providing the alerting signaling based on the specific alerting request. The control system 50 is also associated with a user interface 58 and a network interface 60. The user interface 58 will include the microphone, speaker, keypad, and display required for facilitating communications. The network interface 60 is the wired or wireless interface used to connect directly or indirectly to either the packet network 12 or the PSTN 14.

## Claims

1. A method comprising:
• in association with a caller initiating a call to a called party, receiving from the caller alerting indicia corresponding to a special alerting signal to be provided to the called party via a terminal of the called party; and
• creating a call signaling message comprising a specific alerting request based on the alerting indicia; and
• sending the call signaling message to initiate the call to the called party, wherein the call is presented to the called party using the special alerting signal.

2. The method of claim 1 wherein the alerting indicia is received directly from user input at a user terminal of the caller, and the call signaling message is created by and sent from the user terminal.

3. The method of claim 1 wherein the alerting indicia is received from a user terminal of the caller, and the call signaling message is created by and sent from a call signaling entity in a communication network.

4. An apparatus comprising:
• at least one communication interface; and
• a control system associated with the at least one communication interface and adapted to:
• in association with a caller initiating a call to a called party, receive from the caller alerting indicia corresponding to a special alerting signal to be provided to the called party via a terminal of the called party; and
• create a call signaling message comprising a specific alerting request based on the alerting indicia; and
• send the caii signaling message to initiate the call to the called party, wherein the call is presented to the called party using the special alerting signal.

5. The apparatus of claim 4 wherein in association with the caller initiating a second call to the called party where no alerting indicia is provided by the caller, the control system is further adapted to:
• create a second call signaling message; and
• send the second call signaling message to initiate the second call to the called party, wherein the second call is presented to the called party using a normal alerting signal instead of the special alerting signal.

6. A method comprising:
• in association with a caller initiating a call to a called party, receiving a call signaling message comprising a specific alerting request based on alerting indicia, which was originally provided by the caller in association with initiating the call, and corresponding to a special alerting signal to be provided to the called party when presented with the call;
• identifying the special alerting signal based on the specific alerting request; and
• effecting delivery of the special alerting signal to the called party to alert the called party of the call from the caller.

7. The method of claim 1 or 6 wherein the alerting indicia corresponds to one of a plurality of special alerting signals, such that the caller can select different special alerting signals to be provided to the called party based on the alerting indicia.

8. The method of claim 6 wherein the call signaling message is received at a user terminal of the called party, and the user terminal provides the special alerting signal directly to the called party.

9. The method of claim 6 wherein the call signaling message is received at a network node, and the network node provides the special alerting signal to a user terminal of the called party.

10. The method of claim 3 or 9 wherein the alerting indicia is at least one of the group consisting of a prefix or suffix added to an address or directory number associated with the called party.

11. The method of claim 3 or 9 wherein the alerting indicia is a special feature code provided in association with entering an address or dialing a directory number associated with the called party.

12. The method of claim 3 or 9 wherein the network node is a telephony switch.

13. An apparatus comprising:
• at least one communication interface; and
• a control system associated with the at least one communication interface and adapted to:
• in association with a caller initiating a call to a called party, receive a call signaling message comprising a specific alerting request based on alerting indicia, which was originally provided by the caller in association with initiating the call, and corresponding to a special alerting signal to be provided to the called party when presented with the call;
• identify the special alerting signal based on the specific alerting request; and
• effect delivery of the special alerting signal to the called party to alert the called party of the call from the caller.

14. The apparatus of claim 13 wherein in association with the caller initiating a second call to the called party where no alerting indicia is provided by the caller, the control system is further adapted to:
• receive a second call signaling message for the second call; and
• effect delivery of a normal alerting signal to the called party instead of the special alerting signal to alert the called party of the second call from the caller.

15. A method for allowing a caller to control an alerting signal provided to a called party comprising:
• identifying alerting indicia that was entered by a caller when initiating a call to a called party; and
• effecting delivery of a special alerting signal based on the alerting indicia to the called party when the call is presented to the called party.
